# EUROPÄISCHE PATENTANMELDUNG

(11) **EP 3 403 756 A1**
(43) Veröffentlichungstag der Anmeldung: **21.11.2018**
(21) Anmeldenummer: 18172645.6
(22) Anmeldetag: 16.05.2018
(51) Int. Cl.: B23K 11/11, B23K 11/26

(54) **ELEKTRISCHES KONDENSATOR-ENTLADUNGS-SCHWEISSVERFAHREN**

(30) Priorität: 16.05.2017 DE 102017110611
(71) Anmelder: Harms & Wende GmbH & Co. KG, 21079 Hamburg (DE)
(72) Erfinder: RUSCH, Hans-Jürgen, 28876 Oyten (DE)
(74) Vertreter: Eisenführ Speiser

(57) **Zusammenfassung**

Die Erfindung betrifft ein Kondensator-Entladungs-Schweißverfahren zum Verbinden eines Fügepartnersatzes bestehend aus wenigstens zwei Fügepartnern, umfassend die Schritte elektrisches Laden wenigstens eines ersten Kondensators (604) mit einer ersten Ladevorrichtung (612); Erzeugen eines elektrischen Schweißstromes (I_{S}) durch gesteuertes Entladen des elektrisch geladenen ersten Kondensators (604), wobei der erste Kondensator (604) über einen ersten Entladekreis (652) entladen wird, wodurch ein Entladekreisstrom (I_{E}) erzeugt wird, der Schweißstrom (I_{S}) durch Transformation des Entladekreisstroms (I_{E}) erzeugt wird, und wobei der Schweißstrom (I_{S}) über zwei Elektroden durch einen zwischen den Elektroden angeordneten Fügebereich der wenigstens zwei Fügepartner des Fügepartnersatzes fließt, und das Entladen durch ein im ersten Entladekreis (652) angeordnetes steuerbares Schaltmittel (628) derart gesteuert wird, dass der Entladekreisstrom (I_{E}) und dadurch der erzeugte Schweißstrom (I_{S}) durch ein gepulstes Ansteuern des steuerbaren Schaltmittels (628) gesteuert wird.

## Beschreibung

Die vorliegende Erfindung betrifft ein Verfahren zum Steuern eines Schweißvorgangs eines Kondensator-Entladungs-Schweißverfahrens zum Verbinden eines Fügepartnersatzes bestehend aus wenigstens zwei Fügepartnern. Die vorliegende Erfindung betrifft auch eine Schweißvorrichtung zum Steuern eines Schweißvorgangs eines Kondensator-Entladungs-Schweißverfahrens.

Durch solche Schweißvorgänge entsteht eine Verbindung zwischen wenigstens zwei Fügepartnern, also beispielsweise zwischen zwei zusammenzuschweißenden Blechen, durch ohmsche Erwärmung der Fügestelle.

Üblicherweise wird unter dem Fachbegriff Kondensator-Entladungs-Schweißen, das auch als KE-Schweißen bezeichnet wird, ein Schweißverfahren verstanden, bei dem eine zum Schweißen benötigte Energie aus zuvor aufgeladenen Kondensatoren über ein Schaltmittel wie einen Thyristor auf einen Schweißtransformator geschaltet wird. Eine weitere dem Fachmann bekannte Bezeichnung eines solchen Schweißverfahrens ist das Kondensator-Impuls-Schweißen. Meist ist die Verwendung eines Thyristors erforderlich, weil dieser Halbleiterschalter entsprechend hohe Ströme führen kann.

Dazu werden die Kondensatoren für eine optimale Ausnutzung der Kapazitäten üblicherweise mit einer Spannung von 1500V bis zu 3200V aufgeladen und anschließend schlagartig über einen Thyristor entladen. Es kommt bspw. auch ein Aufladen auf bis zu 5000V in Betracht. Hohe Entladungsströme von bis zu 10kA und darüber können entstehen.

Bestimmt wird die Stromanstiegsgeschwindigkeit des erzeugten Schweißstroms durch die konstruktiven Eigenschaften der Maschine und deren elektrischen Systems sowie die Ladung des Kondensators, besonders durch die Kapazität des Kondensators, seine Spannungshöhe zu Beginn des Schweißprozesses, und der anderen elektrischen Parameter des Stromkreises, einschließlich des Widerstandsverhaltens im Fügebereich. Dadurch ist der vollständige Verlauf des Schweißstroms während des Schweißvorgangs festgelegt.

Als Verbesserungsvorschlag ist schon eine Löschschaltung zum Löschen des Thyristors vorgeschlagen worden. Damit kann aber nur der Schweißstrom vorzeitig beendet werden, ohne dass sein Verlauf bis dahin geändert wird.

Möchte man demnach den Stromfluss ändern, bleibt bisher nur die Möglichkeit eine Änderung der Kapazität und/oder Transformatorübersetzung vorzunehmen, soweit dies über mechanisches Umschalten stufenweise möglich ist.

Zudem ist ein weiteres Problem bei konventionellen KE-Schweißverfahren, dass typischerweise die Schweißzeiten relativ kurz sind, da das Entladen des Kondensators lediglich durch die reale Induktivität begrenzt wird, die durch den konstruktiven Aufbau des Entladekreises und den Parametern des Schweißtransformators gegeben ist. Demnach entlädt sich der Kondensator über einen exponentiellen Stoßstrom sehr schnell. Wegen der relativ kurzen Schweißzeit kann es dabei zu einer höheren Abkühlgeschwindigkeit der Fügestelle kommen und das erhöht die Gefahr von sogenannten Aufhärtungen.

Einen Schweißstrom zu steuern, um ein gezieltes Vorwärmen und Nachwärmen der Fügestelle mit einem Schweißstrom während eines Schweißvorgangs realisieren zu können, ist mit solchen Verfahren nicht möglich. Das Vor- und Nachwärmen ist bei konventionellen KE-Schweißverfahren somit schlecht realisierbar, da der Schweißvorgang nur mit einem einzigen Stromimpuls erfolgt, der durch ein ungesteuertes Entladen des Kondensators erzeugt wird.

Dabei erfolgt das Entladen des Kondensators in konventionellen KE-Schweißverfahren durch einen einpulsigen Energieeintrag in die Fügestelle. Dies bedeutet, dass der Kondensator einmal schlagartig bis zum Ausschaltzeitpunkt, besonders bis zum Unterschreiten des Haltestroms des Thyristors entladen wird. Das erfolgt im Zuge des Abklingens des Stoßstroms oder durch Löschen des Thyristors. Im ersteren Fall lassen sich mehrere Strompulse nur durch ein Nachladen des Kondensators erzeugen, was mit einer deutlichen Taktzeitverlängerung einhergeht.

In dem Europäischen Patent EP 2 607 011 B1 ist ein Verfahren zum elektrischen Widerstandsschweißen gezeigt, dass auch von einem Kondensator ausgeht und sein Entladen über einen Abwärtswandler beeinflusst. Dort ist ein spezielles Verfahren gezeigt, dass so ausgeführt ist, dass es ohne Transformator zwischen dem Kondensator und den Schweißelektroden arbeitet. Ein Transformator soll ausdrücklich nicht verwendet werden und stattdessen wird der Abwärtswandler vorgeschlagen.

Aufgabe der vorliegenden Erfindung ist es somit, zumindest eines der oben genannten Probleme zu adressieren. Insbesondere soll eine Lösung vorgeschlagen werden, mit der das Entladen des Kondensators zum Erzeugen eines Schweißstroms gesteuert werden kann. Zumindest soll zu bisher bekannten Lösungen eine alternative Lösung vorgeschlagen werden.

Erfindungsgemäß wird somit ein Kondensator-Entladungs-Schweißverfahren nach Anspruch 1 vorgeschlagen. Dieses ist zum Steuern eines Schweißvorgangs eines Kondensator-Entladungs-Schweißverfahrens zum Verbinden eines Fügepartnersatzes bestehend aus wenigstens zwei Fügepartnern vorgesehen. Dazu wird wenigstens ein erster Kondensator mit einer geeigneten Ladevorrichtung elektrisch aufgeladen, typischerweise auf eine Ladespannung von etwa 1500V bzw. 3200 V oder bis 5000V, was in im Grunde bekannter Art und Weise erfolgen kann.

Der Kondensator kann auch als Kondensatorbank mit mehreren parallel geschalteten oder anders verschalteten Kondensatoren ausgeführt werden. Demnach wird die zu speichernde Energie des Kondensators mit der Ladespannung bei einer vorgegebenen Kapazität für den Schweißvorgang festgelegt.

Nachdem der Kondensator mit der Ladevorrichtung aufgeladen wurde, wird anschließend ein elektrischer Schweißstrom durch ein gesteuertes Entladen des elektrisch geladenen ersten Kondensators erzeugt. Der erzeugte Schweißstrom fließt dabei über zwei Elektroden, zwischen denen der Fügepartnersatz mit wenigstens zwei Fügepartnern angeordnet ist. Dabei wird der erste Kondensator über einen ersten Entladekreis entladen, wodurch ein Entladestrom erzeugt wird. Dabei wird der Schweißstrom durch Transformation des Entladestroms erzeugt. Während des Schweißvorgangs wird dabei eine Presskraft über die Elektroden auf die Fügepartner aufgebracht. Die Elektroden sind dabei mit dem ersten Entladekreises gekoppelt. Dabei fließt der Schweißstrom mittels der Elektroden durch einen zwischen den Elektroden angeordneten Fügebereich der wenigstens zwei Fügepartner des Fügepartnersatzes. Der Schweißstrom fließt also über die Elektroden und die Fügepartner und damit durch den Fügebereich

Zur Beschreibung des Betriebsverhaltens können Entladekreis und Schweißstromkreis auf einen Reihenschwingkreis in der Art zurückgeführt werden, dass der Transformator eliminiert und die elektrischen Größen des sekundären Schweißstromkreises unter Beachtung des Übersetzungsverhältnisses auf den primären Entladekreis zurückgerechnet werden. Der für die Beurteilung des Betriebsverhaltens betrachtete Schweißstrom ergibt sich durch Multiplikation des Entladestroms mit dem Übersetzungsverhältnis ü₂ des Transformators. Das gilt jedenfalls idealisierend für den Fall, wenn der Transformator keinen gesättigten Kern hat! Im Fall einer Sättigung können Entladestrom I_{E} und Schweißstrom I_{S} nicht mehr über das feste Übersetzungsverhältnis des Transformators umgerechnet werden. Sie stehen dann in einem eigenen Übersetzungsverhältnis. Dazu wird besonders ein Übersetzungsverhältnis der Spitzenströme herangezogen, das kleiner als das Übersetzungsverhältnis des Transformators ist. Hat beispielsweise ein Transformator ein Übersetzungsverhältnis von ü = 12, so kann das Übersetzungsverhältnis der Spitzenströme bspw. bei gesättigtem Transformator bei ü₂ = 7 liegen.

Sofern nachfolgend der Einfachheit halber nur von einem Schaltmittel, Kondensator oder Entladekreis gesprochen wird, wird damit grundsätzlich das steuerbare Schaltmittel, der erste Kondensator bzw. der erste Entladekreis bezeichnet, sofern nichts anderes angegeben ist.

Das Entladen wird durch ein im ersten Entladekreis angeordnetes steuerbares Schaltmittel derart gesteuert, dass der Entladekreisstrom und dadurch der erzeugte Schweißstrom durch ein gepulstes Ansteuern des steuerbaren Schaltmittels gesteuert wird.

Das Entladen des Kondensators wird nun nicht mehr durch ein einmaliges Schließen eines Thyristors gesteuert, das auch als Einschalten bezeichnet werden kann, sondern durch das steuerbare Schaltmittel, das gepulst angesteuert wird. Es öffnet und schließt also gemäß dieser gepulsten Ansteuerung. Es ergibt sich am Ausgang ein pulsförmiges Spannungssignal. Daraus resultierend ergibt sich ein Schweißstrom mit einem überlagerten sägezahnförmigen Muster. Je schneller gepulst wird, umso kleiner ist die Amplitude des überlagerten sägezahnförmigen Musters. Im Ergebnis kann durch das gepulste Ansteuern innerhalb technischer Grenzen ein fast beliebiger Schweißstrom erzeugt werden.

Das steuerbare Schaltmittel kann einen Thyristor in dem Entladekreis ersetzen und auch an der Stelle angeordnet werden, an der bei einem üblichen KE-Schweißverfahren ein Thyristor zum Starten des Entladevorgangs angeordnet bzw. verschaltet ist.

Es wurde erkannt, dass durch ein gepulstes Ansteuern eines geeigneten steuerbaren Schaltmittels wie ein IGBT, ein GTO oder ein IGCT der erzeugte Schweißstrom gesteuert werden kann. Dabei wird über das gepulste Ansteuern das Entladen des Kondensators verzögert, und dadurch gesteuert.

Die Folge dieser gepulsten Ansteuerung ist, dass das Entladen der im Kondensator gespeicherten Energie langsamer erfolgen kann, als in einem konventionellen KE-Schweißverfahren, in welchem nur einmal ein- und ggf. ausgeschaltet wird. Mit dieser gesteuerten Entladung wird zudem erreicht, dass die Ladespannung des Kondensators langsamer sinkt. Dieses Absinken der Ladespannung des Kondensators beeinflusst das Gesamtschweißverhalten. Der jeweils resultierende Strom hängt somit nicht nur von dem gepulsten Ansteuern des steuerbaren Schaltmittels ab, sondern auch vom resultierenden zeitlichen Verlauf der Kondensatorspannung.

Somit ermöglicht das erfindungsgemäße Verfahren während des Schweißvorgangs, also während der Schweißstrom fließt, diesen zu steuern und ggf. auch an Veränderungen anzupassen. Dadurch kann eine Veränderung der Schweißparameter vorgenommen werden, wie beispielsweise die Schweißstromimpulslänge, der Maximalwert des Schweißstromes oder der Energieinhalt der in der Fügestelle umgesetzt wird.

Auch die Stromanstiegsgeschwindigkeit des erzeugten Schweißstroms kann geändert werden, um die ohmsche Erwärmung der Fügestelle zu steuern und bessere Schweißresultate zu erzielen. Damit ergeben sich weitreichende Steuerungsmöglichkeiten eines Kondensator-Entladungs-Schweißverfahrens.

Gemäß einer Ausführungsform ist das Verfahren dadurch gekennzeichnet, dass ein Schweißstromkreis und ein Transformator vorgesehen sind und der Entladekreis und der Schweißstromkreis über den Transformator gekoppelt sind, so dass der Schweißstrom durch Transformation des Entladestroms erzeugt wird. Der Schweißstromkreis, der Entladekreis und der Transformator umfassen zusammen eine reale Induktivität und der Entladekreis umfasst zusätzlich eine virtuelle Induktivität.

Der Schweißstromkreis, der Entladekreis und der Transformator können zusammen in einem Ersatzschaltbild als Reihenschwingkreis beschrieben werden. Der Reihenschwingkreis kann somit als Modell für das gesamte elektrische System der KE-Schweißvorrichtung dienen und er kann die reale Induktivität und die virtuelle Induktivität umfassen.

Dabei ist die reale Induktivität im Wesentlichen durch den konstruktiven Aufbau des Entladekreises und Schweißstromkreises und die darin verschalteten Komponenten sowie die Streuinduktivitäten des Transformators gegeben, die als Teil des Entladekreises oder Schweißstromkreises angesehen werden können. Der Aufbau des Schweißstromkreises ist hierbei aber dominant. Jedes Stück eines elektrischen Leiters und jede weitere Komponente im Schweißstromkreis kann ein induktives Verhalten bzw. eine induktive Eigenschaft aufweisen, das kann auch eine Spule beinhalten. Die Induktivitäten des primärseitigen Entladekreises sind so klein, dass sie vernachlässigbar sind bzw. diese in die Induktivitäten der Sekundärseite eingerechnet werden können. Alle Elemente weisen zusammen ein gesamtes induktives Verhalten bzw. eine gesamte induktive Eigenschaft auf und bilden die reale Induktivität des Reihenschwingkreises. Die reale Induktivität ist dann eine feste Eigenschaft des Reihenschwingkreises und beeinflusst damit das Entladeverhalten des Kondensators im Reihenschwingkreis. Beim Entladen wird im Grunde die Kondensatorspannung an diese Induktivität angelegt und dadurch stellt sich abhängig von dieser Spannung und abhängig von dieser Induktivität ein Strom ein. Umgekehrt kennzeichnet diese Spannung an der Induktivität und dieser Strom durch die Induktivität die Induktivität.

Die virtuelle Induktivität wird durch das steuerbare Schaltmittel realisiert. Hierzu wird das steuerbare Schaltmittel so angesteuert, dass es sich in dem Reihenschwingkreis wie eine Induktivität verhält. Abhängig der Spannung am steuerbaren Schaltmittel und der gepulsten Ansteuerung des steuerbaren Schaltmittels stellt sich ein Strom ein. Diese Spannung am steuerbaren Schaltmittel und dieser resultierende Strom können, zumindest rechnerisch, eine Induktivität kennzeichnen, nämlich eine solche Induktivität, die bei der entsprechenden Spannung zu dem entsprechenden Strom führen würde. Diese Induktivität wird als virtuelle Induktivität gekennzeichnet.

Die reale Induktivität verzögert das Entladen des Kondensators durch ihre induktive Eigenschaft und die virtuelle Induktivität verzögert das Entladen des Kondensators durch die gepulste Ansteuerung des steuerbaren Schaltmittels. Diese Verzögerung durch die virtuelle Induktivität ist umso größer, je kleiner das Puls-Pausen-Verhältnis der gepulsten Ansteuerung des Schaltmittels ist.

Dabei bilden die reale und die virtuelle Induktivität eine Gesamtinduktivität aus, die in einem Ersatzschaltbild des Entladekreises besonders als Serienschaltung von realer und virtueller Induktivität dargestellt werden kann. Dabei bildet die reale Induktivität einen festen Wert und die virtuelle Induktivität einen variablen Wert. Bei einer solchen Reihenschaltung kann die reale Induktivität durch die virtuelle Induktivität vergrößert werden. Der Strom kann dadurch weiter verzögert werden. Eine solche weitere Verzögerung kann nun über eine Vorgabe der virtuellen Induktivität vorgegeben werden. Das Schaltmittel wird dann so angesteuert, dass sich diese virtuelle Induktivität einstellt. Die vorstehenden und teilweise nachstehenden Erläuterungen sind auch vereinfachend zur besseren Veranschaulichung zu verstehen.

Vorzugsweise wird vorgeschlagen, dass der Schweißstrom zumindest teilweise über die virtuelle Induktivität vorgegeben oder gesteuert wird. Wie zuvor beschrieben, beschreibt die virtuelle Induktivität das induktive Verhalten des Schaltmittels, das durch die gepulste Ansteuerung entsteht. Da das gepulste Ansteuern bzw. die Taktung des Schaltmittels verändert werden kann, ist es somit möglich, auch das induktive Verhalten zu verändern. Damit ist es möglich, das steuerbare Schaltmittel wie eine steuerbare Induktivität zu betreiben. Somit ist die virtuelle Induktivität steuerbar.

Vorzugsweise sind die reale Induktivität und die virtuelle Induktivität in Reihe geschaltet und bilden dadurch die Gesamtinduktivität aus, sodass die Gesamtinduktivität größer ist als die reale Induktivität. Durch die Serienschaltung der beiden Induktivitäten entspricht die kleinstmögliche Gesamtinduktivität der realen Induktivität des Entladekreises. Dabei wird der höchste Stromanstieg erzeugt, wenn die kleinstmögliche Gesamtinduktivität vorliegt. Diese kleinstmögliche Gesamtinduktivität würde demnach entstehen, wenn keine gepulste Ansteuerung durchgeführt wird, also das Schaltmittel während des Schweißvorgangs dauerhaft eingeschaltet ist. Insbesondere kann davon ausgegangen werden, dass bei einem Tastgrad D = 100 % die reale Induktivität und die Gesamtinduktivität beide gleich, groß sind, weil die virtuelle Induktivität dann null ist.

Aufgrund der Serienschaltung der realen und virtuellen Induktivität führt die gepulste Ansteuerung stets zu einer Gesamtinduktivität, die größer ist als die reale Induktivität. Demnach kann der Schweißstrom gesteuert, nämlich verringert bzw. verzögert werden, indem die Gesamtinduktivität des Entladekreises mit der virtuellen Induktivität vergrößert wird und sich somit ein flacherer Schweißstromanstieg einstellt bzw. die Entladung des Kondensators verzögert wird.

Der somit erzeugte Schweißstrom weist dann zumindest abschnittsweise eine Stromform und/oder Stromamplitude auf wie ein Schweißstrom der beim Entladen über eine zusätzlich eingebrachte reale Induktivität entstehen würde.

Demnach kann eine einfache Änderung der Stromform, insbesondere der Stromanstieg, über die Änderung der gepulsten Ansteuerung vorgenommen werden, anstatt einen konstruktiven Eingriff im Entladekreis vorzunehmen, wie eine Änderung der Kapazität und Transformatorübersetzung. Durch die Verwendung der virtuellen Induktivität ist die gewünschte Änderung der Stromform einfach parametrierbar.

Zudem können im Vergleich zu einem konventionellen KE-Schweißverfahren der Stromanstieg und der Stromspitzenwert entkoppelt werden.

In einer weiteren Ausführungsform wird vorgeschlagen, dass für das gepulste Ansteuern ein Tastgrad vorgegeben wird, um dadurch den elektrischen Schweißstrom bzw. die virtuelle Induktivität zu steuern. Dabei soll insbesondere ein Stromanstieg des Schweißstromes über den Tastgrad gesteuert werden, wobei der Tastgrad ein Verhältnis einer Pulsdauer zu einer Periodendauer einer Pulsfolge angibt.

Der Tastgrad wird dabei als dimensionslose Verhältniszahl mit einem Wertebereich von 0 bis 1 oder 0 bis 100% angegeben und gibt das Verhältnis der Stromflussdauer zur Periodendauer einer Pulsfolge an. Beispielsweise ergibt sich speziell für den Tastgrad = 0,5 bzw. 50% ein symmetrischer Puls, d. h. die Zeitdauer die das Schaltmittel während einer Periodendauer eingeschaltet ist, ist halb so lang wie die Periodendauer, woraus sich zwangsweise ergibt, dass die Pausenzeit in dem das Schaltmittel ausgeschaltet ist, genau so lang ist, wie die Zeitdauer die das Schaltmittel eingeschaltet ist. Liegt ein Tastgrad von 75% Prozent vor, ist der Schalter während einer Periodendauer zu 75% eingeschaltet und zu 25% ausgeschaltet.

Mit zunehmendem Tastgrad steigt die Zeitdauer, die das Schaltmittel eingeschaltet ist. Demnach entlädt sich der Kondensator mit steigendem Tastgrad schneller bzw. wird die virtuelle Induktivität kleiner. Somit sinkt auch die Ladespannung des Kondensators mit zunehmendem Tastgrad schneller ab.

Durch das Vorgeben des Tastgrades für das gepulste Ansteuern kann somit der elektrische Schweißstrom bzw. die virtuelle Induktivität gezielt während eines Schweißvorgangs gesteuert werden.

Vorzugsweise wird vorgeschlagen, dass Tastgrade während eines Schweißvorgangs verändert werden, um dadurch den Schweißstrom während des Entladevorgangs zu verändern.

Die Möglichkeit den Tastgrad während eines Schweißvorgangs zu verändern, ermöglicht es, dass der Schweißstrom während eines Schweißvorgangs mehrfach oder auch kontinuierlich mit einer Regelung angepasst werden kann. Somit kann der erzeugte Strom relativ beliebig unter Berücksichtigung der endlichen Ladeenergie des Kondensators eingestellt werden.

Dazu wird vorgeschlagen, um einem Absinken des Schweißstroms durch eine abfallende Ladespannung des Kondensators entgegenzuwirken, dass die Tastgrade während eines Schweißvorgangs zum Ende des Schweißvorgangs hin erhöht werden.

Als konkretes Beispiel könnten beispielsweise drei unterschiedliche aber größer werdende Tastgrade von 25%, 38% und 62% nacheinander aber während eines Schweißvorgangs vorgegeben werden. Durch die versetzten Tastgrade wird der Kondensator jeweils unterschiedlich schnell in einem Zeitabschnitt entladen. Die Möglichkeit den Kondensator in diesen Zeitabschnitten unterschiedlich schnell zu entladen, kann dabei genutzt werden, um ein Absinken des Schweißstroms aufgrund der fallenden Kondensatorspannung zu verhindern. Somit kann beispielsweise im Vergleich zu einem Entladen durch einmaliges Schalten eines Thyristors ein längerer Schweißstrom erzeugt werden, der einen näherungsweise gleichbleibenden Maximalwert für die Dauer des Schweißvorgangs aufweist, wobei dieser Maximalwert kleiner ist als ein Maximalwert beim Entladen durch einmaliges Schalten des Thyristors.

Demnach können im Gegensatz zu konventionellen KE-Schweißverfahren relativ lange Schweißzeiten erzeugt und somit eine hohe Energie bei begrenztem Maximalstrom in die Fügestelle eingebracht werden.

Darüber hinaus kann durch eine Vorgabe unterschiedlicher Tastgrade auch ein Vor- und ein Nachwärmen der Fügestelle realisiert werden. Dabei wird als Vor- und Nachwärmen verstanden, dass ein Schweißstrom erzeugt wird, der nicht unmittelbar zu einem Aufschmelzen der Fügepartner im Fügebereich führt aber das Material im Fügebereich erwärmt.

Somit kann ein langes und wirkungsvolles Vor- und Nachwärmen der Fügepartner realisiert werden. Demnach kann beispielsweise beim Nachwärmen die Abkühlgeschwindigkeit der Schweißstelle wesentlich reduziert und ein verbessertes Gefüge erreicht werden, welches sich durch einen geringeren Grad von Aufhärtungen auszeichnet.

Ferner ist von Vorteil, dass das Entladen des Kondensators durch einen mehrpulsigen Energieeintrag in die Fügestelle über mehrere Tastgrade realisiert werden kann, ohne ein Nachladen des Kondensators im Sinne einer Taktzeitverlängerung durchführen zu müssen.

In einer weiteren Ausführungsform wird vorgeschlagen, dass das gepulste Ansteuern des Schaltmittels derart gesteuert wird, dass ein vorgegebener Maximalwert des Schweißstroms nicht überschritten wird, wobei der Maximalwert über einen bzw. den Tastgrad umgesetzt wird.

Demnach kann eine Begrenzung des maximalen Schweißstroms über eine Vorgabe des Tastgrades umgesetzt werden. Wird zum Beispiel bei dem gepulsten Ansteuern nur ein maximaler Tastgrad von 60% erlaubt, stellt sich aufgrund der höheren virtuellen Induktivität ein niedrigerer Stromanstieg sowie ein niedrigerer Scheitelwert bzw. Maximalwert des Schweißstroms ein, als es beispielsweise bei einem Tastgrad von 80% der Fall wäre.

Somit kann über den Tastgrad festgelegt werden, dass ein vorgegebener Maximalwert des Schweißstromes der sich bei einem festgelegten Tastgrad einstellt, nicht überschritten wird. Es wird also ein flacher und langer Schweißstrom durch die Begrenzung des Tastgrades erzeugt anstatt eines spitzen und kurzen Schweißstroms.

Demnach wird vorgeschlagen, den Tastgrad zu beschränken, um damit einen Maximalwert des erzeugten Schweißstroms nicht zu überschreiten, der unter Umständen zu einer zu starken Wärmeentwicklung im Fügebereich oder zu einer thermischen Überlastung der Bauelemente im Entladekreis führt.

Vorzugsweise wird vorgeschlagen, dass das Schaltmittel einen oder mehrere steuerbare Halbleiterschalter aufweist, insbesondere einen IGBT, einen GTO oder einen IGCT.

Diese steuerbaren Leistungshalbleiter, die besonders als Leistungstransistoren ausgebildet sein können, eigenen sich somit besonders gut, um das gesteuerte Entladen des elektrisch geladenen Kondensators durchzuführen und sind dem Fachmann allgemein bekannt. Die Leistungshalbleiter bzw. Leistungstransistoren können dabei auch als SiC-Variante ausgeführt sein, da diese Leistungshalbleiter bzw. Leistungstransistoren auf SiC-Basis eine größere Stromtragfähigkeit aufweisen.

In einer weiteren Ausführungsform wird vorgeschlagen, dass das Schaltmittel mehrere zueinander parallelgeschaltete steuerbare Halbleiterschalter aufweist, insbesondere um dadurch einen hohen Entladekreisstrom und somit einen hohen Schweißstrom zu erreichen.

Mit dem Aufkommen von abschaltbaren Bauteilen, wie IGBTs, GTOs oder IGCTs, können Ströme heute in leistungselektronischen Schaltungen direkt abgeschaltet werden. In KE-Schweißmaschinen treten Belastungen auf, z.B. Entladeströme bis 10 kA und darüber, die auf den ersten Blick außerhalb der Leistungsdaten der oben genannten abschaltbaren Bauteile liegen. Auf den zweiten Blick ist der Einsatz von IGBTs aber durchaus vorstellbar, wenn man deren gute Möglichkeit zum Parallelschalten berücksichtigt.

Um den hohen Entladekreisstrom des Kondensators von bis zu 10kA und darüber schalten zu können, wird vorgeschlagen, dass das Schaltmittel auch mehrere steuerbare Halbleiterschalter aufweisen kann, die parallel geschaltet werden. Der Gesamtstrom wird somit auf mehrere Leistungshalbleiter aufgeteilt.

Vorzugsweise wird in einer weiteren Ausführungsform vorgeschlagen, dass der Schweißstrom I_{S} ein über ein Übersetzungsverhältnis ü₂ einstellbarer Entladekreisstrom I_{E} des Kondensators nach der Gleichung I_{S} = ü₂ · I_{E} ist. Dabei wird der Entladekreisstrom über den Tastgrad mit dem Schaltmittel gepulst.

Bei einem KE-Schweißverfahren wird typischerweise zwischen einem Entladekreis und einen Schweißstromkreis unterschieden. Diese beiden geschlossenen Schaltkreise sind dabei über einen Transformator mit einem festen Übersetzungsverhältnis ü gekoppelt. Dabei wird der Strom, der durch das Entladen des Kondensators im Entladekreis erzeugt wird, allgemein als Entladekreisstrom I_{E} oder auch als Primärstrom bezeichnet. Der Strom, der im Schweißstromkreis über den Zusammenhang I_{S}= ü₂ · I_{E} erzeugt wird, wird dabei als Schweißstrom I_{S} oder Sekundärstrom bezeichnet.

Das Übersetzungsverhältnis für den Strom, das hier als zweites Übersetzungsverhältnis ü₂ oder vereinfacht nur als Übersetzungsverhältnis ü₂ bezeichnet wird, entspricht dem festen Übersetzungsverhältnis ü des Transformators, wenn keine Sättigung erreicht wird. Wird aber eine Sättigung erreicht, so ist das Übersetzungsverhältnis ü₂ kleiner als das feste Übersetzungsverhältnis ü. Zur Berücksichtigung des Sättigungsfalls wird somit zwischen dem festen Übersetzungsverhältnis ü und dem Übersetzungsverhältnis ü₂ unterschieden.

Demnach wird der Entladekreisstrom I_{E} aus dem Entladekreis über das Übersetzungsverhältnis ü₂ in den Schweißstrom I_{S} in den Schweißstromkreis transformiert. Je nach Übersetzungsverhältnis ü₂ stellt sich somit ein Schweißstrom ein, der um ein Vielfaches größer ist als der Entladekreisstrom.

Dazu wird vorgeschlagen, dass der Entladekreisstrom einen Maximalwert von wenigstens 5kA, insbesondere von wenigstens 10kA und/oder das Schaltmittel über eine Pulsfrequenz von wenigstens 1kHz, insbesondere wenigstens 5kHz angesteuert wird. Die Pulsfrequenz beschreibt dabei eine Frequenz, mit der das Schaltmittel pro Sekunde getaktet bzw. gepulst angesteuert wird.

Dabei ist die vorgeschlagene Pulsfrequenz vorteilhaft, da bei diesen Frequenzen eine Reduzierung der Stromschwankungen während einer Periodendauer im Schweißstromverlauf realisiert werden kann, ohne dass die Pulsfrequenz zu hoch ausfällt, um effizient geschaltet zu werden.

An dieser Stelle soll vorsorglich angemerkt werden, dass diese sehr hohen Schaltströme in hohen Sicherheitsanforderungen sowie Dimensionierungsproblemen der Bauteile resultieren, sodass andere Schaltvorrichtungen die zwar einen Primär- und einen Sekundärkreis aufweisen, die hohen Ströme des KE-Schweißens aber nicht realisieren können, ungeeignet sind, ein KE-Schweißverfahren sicher durchführen zu können.

In einer weiteren Ausführungsform wird vorgeschlagen, dass über das Schaltmittel eine dem Fügebereich während des Schweißvorgangs zuzuführende Energiemenge gesteuert wird.

Durch die Möglichkeit, den erzeugten Schweißstrom steuern zu können, kann ebenfalls eine Portionierung der Energieeinbringung in den Fügebereich bzw. in die Fügepartner vorgegeben werden. Somit kann nicht nur der Stromsollwert vorgegeben werden, sondern auch eine dem Fügebereich während des Schweißvorgangs zuzuführende Energiemenge gesteuert werden.

Vorzugsweise wird vorgeschlagen, dass der Schweißstrom während des Schweißvorgangs in Abhängigkeit wenigstens einer Messgröße geändert bzw. geregelt wird, insbesondere, dass
- während des Schweißvorgangs aus einer gleichzeitigen Strom- und Spannungsmessung ein Schweißwiderstand ermittelt wird und
- der Tastgrad in Abhängigkeit des erfassten Schweißstroms gesteuert wird, insbesondere, um den Schweißstrom dadurch auf einen Sollstrom zu regeln, und/oder
- der Schweißstrom in Abhängigkeit der Messgrößen, insbesondere aus der Liste aufweisend
   - Schweißwiderstand
   - Elektrodenweg, und
   - Presskraft der Elektroden
geändert bzw. geregelt wird, und/oder
- eine Strombegrenzung des Schweißstroms in Abhängigkeit wenigstens einer Messgröße geändert bzw. geregelt wird.

Demnach wird vorgeschlagen, dass im beschriebenen KE-Schweißverfahren während des Schweißvorgangs wenigstens die Schweißparameter Schweißstrom und die Schweißspannung, erfasst werden. Diese Parameter bzw. Messgrößen werden dabei genutzt, um eine Regelung des Tastgrades bzw. des Schweißstromes durchführen zu können. Dabei wird insbesondere vorgeschlagen, dass der Tastgrad in Abhängigkeit des erfassten Schweißstroms gesteuert wird. Es wird somit eine Stromregelung ermöglicht.

Zusätzlich oder alternativ wird zudem vorgeschlagen, dass der Schweißstrom in Abhängigkeit des Schweißwiderstands geändert bzw. geregelt wird.

Demnach kann im praktischen Einsatz eine kontinuierliche Regelung des Tastgrades vorgenommen werden, und ein kontinuierlicher Stromfluss geregelt werden, anstatt mehrerer Tastgrade zeitlich hintereinander vorzugeben. Auf diese Art lässt sich eine adaptive Regelung realisieren. Die Schweißsteuerung ist somit in der Lage, auftretende Störeinflüsse auszuregeln. Der Schweißwiderstand ist dabei ein wichtiges Charakteristikum für den Schweißvorgang. Er kann Informationen über das Verhalten des Fügebereiches geben.

Es kommt auch in Betracht, in Abhängigkeit des Elektrodenweges zu steuern oder zu regeln. Der Elektrodenweg beschreibt den Weg, den sich die Elektroden beim Schweißvorgang nähern, besonders durch das Aufweichen der Fügepartner beim Schweißen, was auch als Entfestigen bezeichnet werden kann. Dieser Elektrodenweg gibt eine Information über den Fortgang des Schweißens.

Außerdem oder alternativ kann die Presskraft der Elektroden in die Steuerung oder Regelung einfließen. Die Elektroden werden für den Schweißvorgang gegeneinander gepresst und Veränderungen der Fügepartner zwischen den Elektroden können sich auf die Presskraft auswirken. Auch sie gibt daher eine Information über den Schweißfortgang.

Ferner kann zusätzlich oder alternativ, auch wenn keine Regelung eingesetzt wird, zumindest eine automatische Strombegrenzung anhand der aufgenommen Messgrößen genutzt werden, die beim herkömmlichen KE-Schweißen nicht möglich ist. Bei einer schnellen Abfolge der Schweißungen besteht immer die Gefahr, dass sich die Remanenz des Transformators schleichend erhöht, sich dadurch die Sättigung des Transformatorkerns bei kleineren Strömen einstellt und somit unbemerkt der Entladekreisstrom des Kondensators steigt - was wiederum zur Beschädigung/Zerstörung der Leistungshalbleiter führen kann. Wird der Entladekreisstrom des Kondensators überwacht, kann er mittels gepulsten Betriebs direkt während des Schweißvorgangs begrenzt werden.

In einer weiteren Ausführungsform wird vorgeschlagen, dass die beiden Elektroden an wenigstens einen weiteren Entladekreis angeschlossen sind bzw. Teil eines weiteren Entladekreises bilden und der weitere Entladekreis
- einen weiteren Kondensator aufweist und
- ein weiteres Schaltmittel zum Steuern eines Entladens des weiteren Kondensators, um einen weiteren Schweißstrom in einem zusätzlichen Zeitabschnitt über die beiden Elektroden zu steuern, wobei
   das Entladen des weiteren Kondensators durch wenigstens ein zusätzliches Schaltmittel derart gesteuert wird, dass der erzeugte zusätzliche Schweißstromabschnitt durch ein einmaliges Einschalten und Abschalten des Schaltmittels gesteuert wird, und wobei insbesondere
   in dem zusätzlichen Zeitabschnitt nur der zusätzliche Schweißstrom erzeugt wird und das steuerbare Schaltmittel dabei geöffnet bleibt.

Der Grundgedanke dieser Ausführungsform ist, einen Schweißstrom aus einer Kombination aus gesteuertem und ungesteuertem Entladen jeweils eines Kondensators zu erzeugen. Durch das ungesteuerte Entladen kann ein Schweißstrom in bekannter und einfacher Art und Weise erzeugt werden und einen Teil des Schweißstromes für einen vorbestimmten zusätzlichen Zeitabschnitt bereitstellen. Im übrigen Zeitverlauf des Schweißvorgangs, ist dann der gesteuerte Strom vorgesehen. Dabei wurde erkannt, dass in einem Teil des Schweißvorgangs ein ungesteuerter Strom ausreichen kann. Hierdurch kann der Entladekreis mit gesteuertem Schaltmittel entlastet und dadurch kleiner dimensioniert werden. Das ist besonders auch deswegen sinnvoll, weil steuerbare Leistungshalbleiter teurer sind als die bisher üblichen, nicht steuerbaren Thyristoren.

Dazu ist zu dem ersten Entladekreis ein parallel geschalteter weiterer Entladekreis vorgesehen, um den zusätzlichen Schweißstromabschnitt zu erzeugen. Dieser zusätzliche Schweißstromabschnitt wird dabei nur durch ein Einschalten und Abschalten des Schaltmittels im zusätzlichen Entladekreis erzeugt. Demnach ist der zusätzliche Schweißstromabschnitt abgesehen vom Ein- und Abschaltpunkt ungesteuert. Somit eignet sich in diesem speziellen Fall auch ein Thyristor als Schaltmittel, der sich für ein gepulstes Ansteuern nicht eignet.

Der erste Entladekreis und der weitere Entladekreis weisen einen gemeinsamen Transformator zum Transformieren des Entladekreisstroms auf den Schweißstrom auf.

Dabei wird vorgesehen, dass in dem zusätzlichen Zeitabschnitt nur bzw. ausschließlich der weitere Schweißstrom im zusätzlichen Entladekreis erzeugt wird. Das wird vorgeschlagen, um Ausgleichsströme zwischen den parallel geschalteten Entladekreisen zu verhindern.

Somit erlaubt diese Kombination beispielsweise, dass ein gesteuerter Schweißstrom zum Vor- und Nachwärmen verwendet werden kann und in einem Zwischenzeitraum zwischen dem Vor- und Nachwärmen ein Zwischenschweißstrom als ungesteuerter Schweißstrom erzeugt wird, wobei der Zwischenzeitraum hierbei den zusätzlichen Zeitabschnitt bildet. Gemäß einer weiteren alternativen Ausführungsform ist auch das weitere Schaltmittel steuerbar. Mit beiden Entladekreisen, wobei auch noch weitere vorgesehen sein können, können dadurch jeweils variabel Entladekreisströme und damit Schweißströme erzeugt werden, die vielfältig kombiniert werden können.

Erfindungsgemäß wird auch eine Kondensator-Entladungs-Schweißvorrichtung vorgeschlagen, die synonym auch als KE-Schweißvorrichtung bezeichnet werden kann.

Sie ist somit vorbereitet zum Durchführen eines Schweißvorgangs eines Kondensator-Entladungs-Schweißverfahrens zum Verbinden eines Fügepartnersatzes bestehend aus wenigstens zwei Fügepartnern. Die KE-Schweißvorrichtung, umfasst einen ersten Entladekreis mit einem ersten Kondensator zum Bereitstellen einer elektrischen Ladung für den Schweißvorgang, und ein elektrisch in Reihe zum ersten Kondensator geschaltetes steuerbares Schaltmittel zum gesteuerten Entladen des Kondensators zum Erzeugen eines Entladekreisstromes. Sie umfasst weiter einen Schweißstromkreis mit zwei Elektroden zum Führen eines durch Transformation des Entladekreisstroms erzeugten Schweißstroms über die wenigstens zwei Fügepartner.

Außerdem ist ein Transformator vorgesehen, zum Koppeln des Entladekreises und des Schweißstromkreises so, dass der Schweißstrom durch Transformation des Entladestroms erzeugt wird. Dabei ist das steuerbare Schaltmittel zum gepulsten Ansteuern vorbereitet, um über das gepulste Ansteuern den Entladekreisstrom und damit den Schweißstrom zu steuern. Das Schaltmittel steuert also das Entladen des Kondensators und dadurch den Entladekreisstrom und der Entladekreisstrom wird dann in dem Transformator zum Schweißstrom transformiert, nämlich insbesondere von der Primärseite zur Sekundärseite.

Das steuerbare Schaltmittel ist dadurch zum gepulsten Ansteuern vorbereitet, dass es mit einer Ansteuereinheit verknüpft ist oder verknüpft werden kann, und dass es vom Typ gepulst angesteuert werden kann. Insbesondere ist es kein herkömmlicher Thyristor.

Vorzugsweise ist vorgesehen, dass für die Kondensator-Entladungs-Schweißvorrichtung eine Ladevorrichtung vorgesehen ist, zum Laden des ersten Kondensators.

Außerdem ist vorgesehen, dass der Entladekreis ein zum ersten Kondensator und zum steuerbaren Schaltmittel parallel geschaltetes Freilaufmittel umfasst. Insbesondere ist hier eine Freilaufdiode, bei großen Belastungen ein Thyristor vorgesehen. Der Leistungshalbleiter verhindert eine Unterbrechung des Entladekreisstromes bei geöffnetem steuerbaren Schaltmittel. Dann fließt nämlich der Entladekreisstrom durch die Freilaufdiode bzw. den Freilaufthyristor und die Primärseite des Transformators.

Gemäß einer weiteren Ausführungsform ist vorgesehen, dass die KE-Schweißvorrichtung wenigstens einen weiteren Entladekreis aufweist. Dieser umfasst wenigstens einen weiteren Kondensator; eine weitere Ladevorrichtung zum elektrischen Laden des weiteren Kondensators und wenigstens ein weiteres Schaltmittel, insbesondere ein nicht-steuerbares Schaltmittel, das zu dem weiteren Kondensator in Reihe geschaltet ist, zum Erzeugen des Entladekreisstromes.

Als nicht steuerbare Schaltmittel wird besonders ein Thyristor vorgesehen. Außerdem ist wenigstens eine Steuereinheit vorgesehen, um das steuerbare Schaltmittel des ersten Entladekreises und das nicht steuerbare Schaltmittel des weiteren Entladekreises so zu koordinieren, dass jeweils nur eines der beiden Schaltmittel aktiv ist, um den Entladekreisstrom zu steuern, um dadurch den Schweißstrom zu steuern. Die beiden Schaltmittel, nämlich das steuerbare und das nicht steuerbare werden somit nacheinander bzw. abwechselnd angesteuert, um jeweils ein Entladen zu steuern bzw. einzuleiten. Dadurch wird der Entladekreisstrom gesteuert, der sich dadurch aus mehreren Teilen oder Teilströmen zusammensetzen kann, nämlich in zeitlichem Sinne. Die Koordination kann die Steuereinheit übernehmen, die beide Schaltmittel ansteuern kann und die auch mit einer weiteren übergeordneten Steuerung oder Steuereinheit verbunden oder kombiniert sein kann.

Das wenigstens eine weitere Schaltmittel kann gemäß einer Ausführungsform aber auch steuerbar ausgeführt sein, um dadurch eine höhere Flexibilität zum Steuern des Schweißstroms zu erreichen.

Vorzugsweise ist die KE-Schweißvorrichtung, insbesondere ihre Steuereinheit, dazu vorbereitet, ein Kondensator-Entladungs-Schweißverfahren gemäß einer vorstehend beschriebenen Ausführungsform auszuführen. Das kann besonders bedeuten, dass entsprechende Verfahrensschritte in der Steuereinheit implementiert sind.

Zusammengefasst ermöglichen die vorstehenden Ausführungsformen des erfindungsgemäßen Verfahrens somit gegenüber konventionellen KE-Schweißverfahren Vorteile, die im Folgenden gelistet sind, und nicht abschließend sein müssen.

Im gepulsten Betrieb einer Kondensatorentladung mit einem abschaltbaren Leistungshalbleiter, was z. B. ein IGBT sein kann, können gegenüber anderen Anwendungen:
- ein stromgeregelter Schweißvorgang erzeugt werden. Damit wird einer der wesentlichen Nachteile des KE-Schweißens - der oft betont wird - beseitigt.
- eine automatische Strombegrenzung eingerichtet werden, die auch während des Schweißvorgangs den Strom unterhalb eines vorgegebenen Maximalwerts begrenzt.
- allgemein die Parameter während des Stromflusses an die Bedingungen angepasst werden, um so eine adaptive Regelung zu ermöglichen.
- die Stromanstiege eines KE-Pulses in einem weiten Bereich variiert werden.
- die zugeführte Energie auch unabhängig vom Maximalstrom eingestellt werden.
- lange Schweißzeiten - deutlich oberhalb dem 1,5-fachen eines Standardpulses - erreicht werden.
- lange und wirkungsvolle Nachwärmpulse erzeugt werden. Somit kann die Abkühlgeschwindigkeit der Schweißstelle wesentlich reduziert und ein verbessertes Gefüge erreicht werden.

Die vorliegende Erfindung wird nun nachfolgend exemplarisch anhand von Ausführungsbeispielen unter Bezugnahme auf die begleitenden Figuren näher erläutert.
- Figur 1: zeigt ein Ersatzschaltbild als elektrisches Modell einer bekannten Schweißvorrichtung.
- Figur 2: zeigt ein Ersatzschaltbild als elektrisches Modell einer Schweißvorrichtung mit einer virtuellen Induktivität.
- Figur 3: zeigt mehrere Schweißstromverläufe einer Kondensatorentladung gemäß dem Stand der Technik, wobei zum Schalten des Schweißstroms ein Thyristor verwendet wird.
- Figur 4: zeigt mehrere Schweißstrom- und Kondensatorspannungsverläufe gemäß einer Ausführungsform in Abhängigkeit verschiedener Tastgrade.
- Figur 5: zeigt einen Vergleich zwischen einem gepulsten Betrieb bzw. einer virtuellen Induktivität und dem Einsatz einer vergrößerten realen Induktivität.
- Figur 6: zeigt einen Schaltplan einer Schweißvorrichtung gemäß einer Ausführungsform mit einem IGBT als gesteuertem und drei Thyristoren als ungesteuerten Schaltmitteln.
- Figur 7: zeigt einen erzeugten Schweißstrom mit einem Vorwärmbereich, einem Schweißstrombereich und einem Nachwärmbereich.
- Figur 8: zeigt einen erzeugten Schweißstrom als Langzeitpuls.
- Figur 9: zeigt den Einfluss der Taktfrequenz auf den Verlauf des Schweißstroms beim gepulsten Ansteuern.

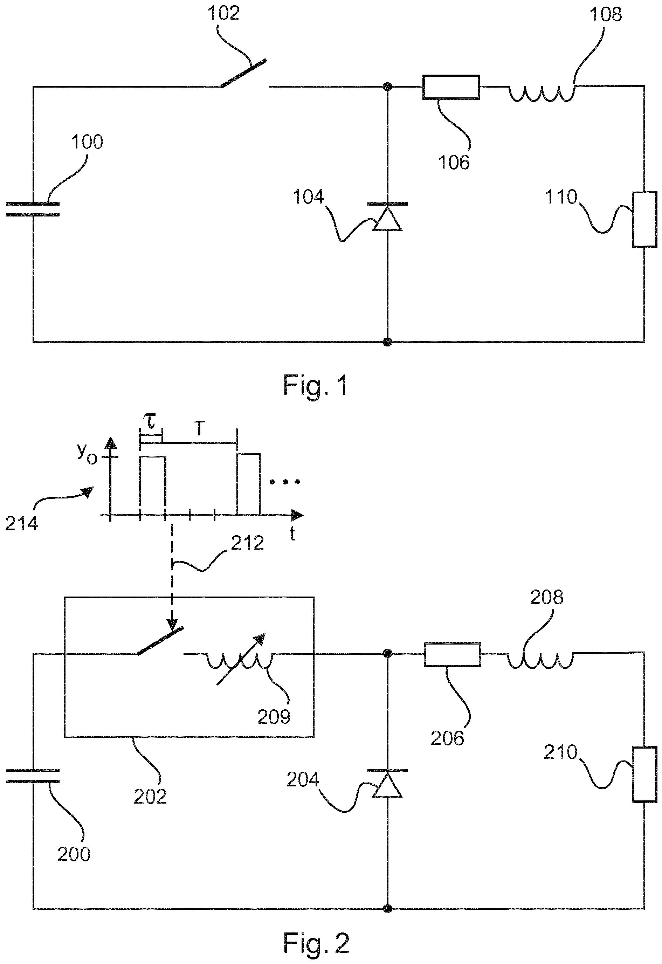

Figur 1 zeigt ein Ersatzschaltbild eines Reihenschwingkreises mit Freilaufdiode 104 als elektrisches Modell einer erfindungsgemäßen Schweißvorrichtung. Der Leistungshalbleiter 102 als gesteuertes Schaltmittel, der den Kondensator 100 auf die Last 110 schaltet, ist als neutraler Schalter 102, also als Schalter 102 in allgemeiner Form dargestellt.

Zum Schweißen wird der Schalter 102 geschlossen und am Ende des Schweißvorgangs wieder geöffnet. Dabei kann sich ein veränderter Stromfluss nur über veränderte Grundelemente des gezeigten Reihenschwingkreises ergeben, der als Modell für die Schweißvorrichtung dienen kann. Grundsätzlich ist in einer Schaltung einer Schweißvorrichtung eines KE-Schweißverfahrens ein Transformator vorgesehen, so dass sich der Kondensator über eine Primärseite des Transformators entlädt und sich dabei ein Schweißstrom an der Sekundärseite einstellt. Zur Vereinfachung des Sachverhalts können der primärseitige Entladekreis und der sekundärseitige Schweißstromkreis zu einem Reihenschwingkreis zusammengefasst werden und alle Sekundärgrößen unter Beachtung des Übersetzungsverhältnisses auf die Primärseite umgerechnet werden. Somit kann die Darstellung eines Transformators entfallen, der den Entladekreis und den Schweißstromkreis über ein festes Übersetzungsverhältnis ü koppelt. Von dieser Betrachtung gehen auch sämtliche Erläuterungen aus, sofern nicht ausdrücklich etwas anderes angegeben wird.

Da der Widerstand 106 und die Induktivität 108 keine realen Bauteile sind, sondern die jeweiligen Eigenschaften der Schweißvorrichtung zusammenfassen, können diese nicht verstellbar ausgeführt werden, um Veränderungen am Stromfluss vorzunehmen. Sie müssten durch veränderliche "Bauteile" ergänzt werden. Ein zusätzlicher Widerstand verbietet sich aber, da er erhebliche Zusatzverluste verursacht, weil der Strom sehr hoch ist. Aber eine veränderliche Induktivität könnte verlustfrei das Variieren des Stromes zulassen. Der Einsatz einer realen Drossel wäre aber sehr kostspielig und würde zusätzlichen Bauraum benötigen. Deshalb wird der Einsatz einer virtuellen Induktivität vorgeschlagen, die sich durch einen getakteten Schaltbetrieb realisieren lässt. Dabei ist der getaktete Schaltbetrieb ein Synonym für die gepulste Ansteuerung.

Figur 2 zeigt ein Ersatzschaltbild eines erweiterten Reihenschwingkreises mit Freilaufdiode 204 und virtueller Induktivität 209 als elektrisches Modell einer vorgeschlagenen Schweißvorrichtung. Ein Leistungshalbleiter bzw. Leistungshalbleiterschalter bildet hier das steuerbare Schaltmittel 202, das den Kondensator 200 auf die Last 210, nämlich im Wesentlichen den umgerechneten Lastwiderstand des Fügebereichs schaltet. Es ist hier nur der Einfachheit halber als neutraler Schalter, also Schalter allgemeiner Art dargestellt. Da der Widerstand 206 und die Induktivität 208 auch hier keine realen Bauteile sind, sondern die jeweiligen Eigenschaften der Schweißvorrichtung zusammenfassen, können diese nicht verstellbar ausgeführt werden, um Veränderungen am Stromfluss vorzunehmen.

Um nun eine Veränderung des Stromflusses vornehmen zu können, wird durch die gepulste Ansteuerung des Schaltmittels 202 eine virtuelle Induktivität 209 realisiert. Diese virtuelle Induktivität 209 ist im Ersatzschaltbild der Figur 2 als Ergänzung des Schaltmittels 202 und so in Reihe zur realen Induktivität 208 angeordnet, die alle einzelnen realen Induktivitäten des Entladekreises zusammenfasst. Dabei ist die virtuelle Induktivität 209 über einen Tastgrad der Ansteuerung des Schaltmittels 202 steuerbar. Die Pausen innerhalb eines Zyklus, in denen das Schaltmittel 202 geöffnet ist, verzögern die Kondensatorentladung des Kondensators 200. Diese Verzögerung ist umso größer, je kleiner der Tastgrad D = *τ*/T ist. Der Tastgrad D berechnet sich demnach aus dem Quotienten der Impulsdauer *τ* und der Periodendauer T einer Pulsfolge. Der Tastgrad wird dabei über ein Ansteuersignal 212 vorgegeben. Die reale Induktivität 208 verhindert das vollständige Absinken des Schweißstroms auf null in einer solchen Pause. Um zu große Stromschwankungen zu verhindern, sollte eine Taktfrequenz im kHz-Bereich gewählt werden.

Zur Veranschaulichung des Tastgrades ist ein Zeitverlauf eines Rechtecksignals 214 in der Figur 2 dargestellt. Dabei gibt der Tastgrad, der auch als Aussteuergrad, (englisch duty factor) bezeichnet werden kann, für eine Folge von Impulsen das Verhältnis der Impulsdauer τ zur Periodendauer T an, also das Verhältnis, wie lange das Schaltmittel 202 während einer Periodendauer T eingeschaltet ist. Der Tastgrad wird als dimensionslose Verhältniszahl mit einem Wertebereich von 0 bis 1 oder 0 bis 100 % angegeben. In dem Beispiel in der Figur 2 wurde zur Veranschaulichung ein Tastgrad von 25% eingestellt. Wie am Zeitverlauf des Rechtecksignals 214 zu erkennen ist, beträgt die Impulsdauer *τ* 25 % der Periodendauer T, wobei y₀ eine beliebige Höhe des Rechtecksignals veranschaulicht.

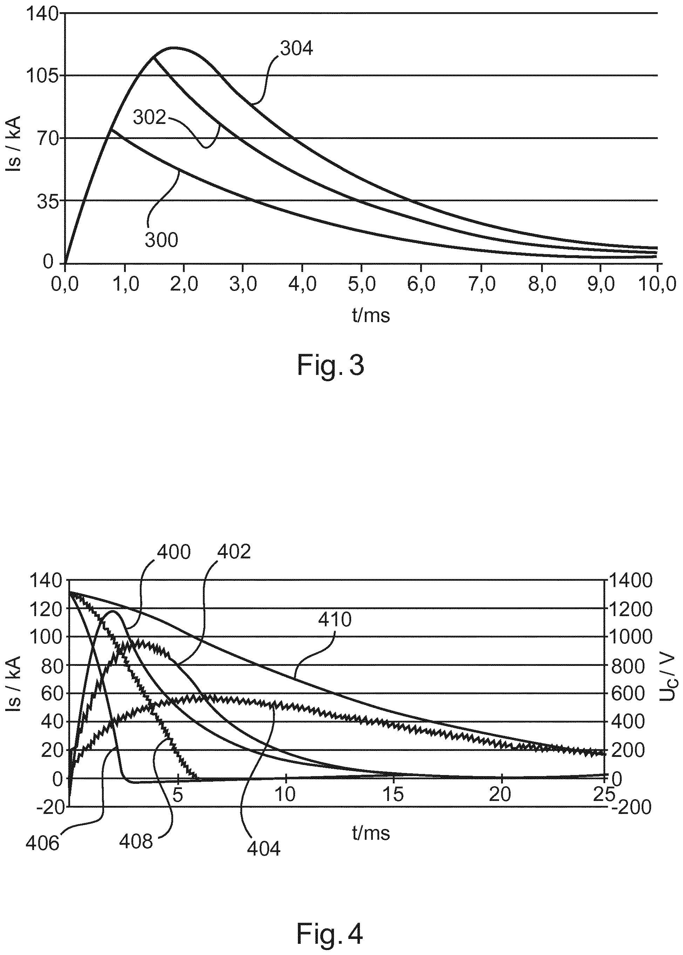

Figur 3 zeigt den Stromverlauf einer Kondensatorentladung beim Löschen des Kondensators zu verschiedenen Zeitpunkten, wobei als Schaltmittel ein Thyristor verwendet wird. Es kann somit eine Schweißvorrichtung gemäß Figur 1 zu Grunde liegen. Dazu sind drei Schweißstromverläufe 300, 302 und 304 in der Figur 3 dargestellt. Dazu wurde der Thyristor zu den unterschiedlichen Schaltzeiten gelöscht, nämlich bei dem Stromverlauf 300 nach 0,75 ms, bei 302 nach 1,5 ms und bei 304 erst, nachdem der Ladekondensator komplett entladen wurde. Wie der Figur 3 zu entnehmen ist, steigt der Schweißstrom I_{S} bei unterschiedlichen Löschzeiten des Thyristors stets mit derselben Geschwindigkeit an. Eine Änderung des Stromanstiegs ist somit nicht möglich.

Figur 4 zeigt einen Verlauf des Schweißstroms I_{S} und der Kondensatorspannung U_{C} in Abhängigkeit von drei verschiedenen Taktgraden D. Dazu sind die Stromverläufe 400 (D=100%), 402 (D=50%) und 404 (D=20%) über eine Zeitachse aufgetragen. Zur weiteren Veranschaulichung sind zudem die Kondensatorspannungen 406, 408 und 410 zu den jeweiligen Stromverläufen 400, 402 und 404 dargestellt. Dabei ist der Figur 4 zu entnehmen, dass die Scheitelwerte bzw. der Maximalwert des Schweißstroms bei den Stromverläufen 402 und 404 mit abfallendem Tastgrad im Gegensatz zum Verlauf 400 absinken. Dafür sind die beiden Stromverläufe der Kurven 402 und 404 jedoch insgesamt breiter. Ebenso ist der Einfluss des Tastgrades anhand der Kondensatorspannung U_{C} zu erkennen. Je größer der Tastgrad ist, also je länger die Zeitdauer in dem das gesteuerte Schaltmittel eingeschaltet ist, desto schneller sinkt die Kondensatorspannung U_{C} ab.

Entscheidend beim Einsatz einer virtuellen Induktivität ist also, ebenso wie bei veränderten realen Induktivitäten, dass sich die Stromanstiegsgeschwindigkeit, der Scheitelwert des Stromes und die zeitliche Lage des Strommaximums dadurch deutlich variieren lassen. Eine Reduzierung des Taktgrades - was eine Erhöhung der virtuellen Induktivität bedeutet - führt dabei
- zu einer reduzierten Stromanstiegsgeschwindigkeit
- zu einem reduzierten Spitzenstrom,
- zu einer verlängerten Stromanstiegszeit und
- zu einer verlängerten Stromflusszeit.

Eine Erhöhung des Taktgrades bringt entgegengesetzte Änderungen mit sich.

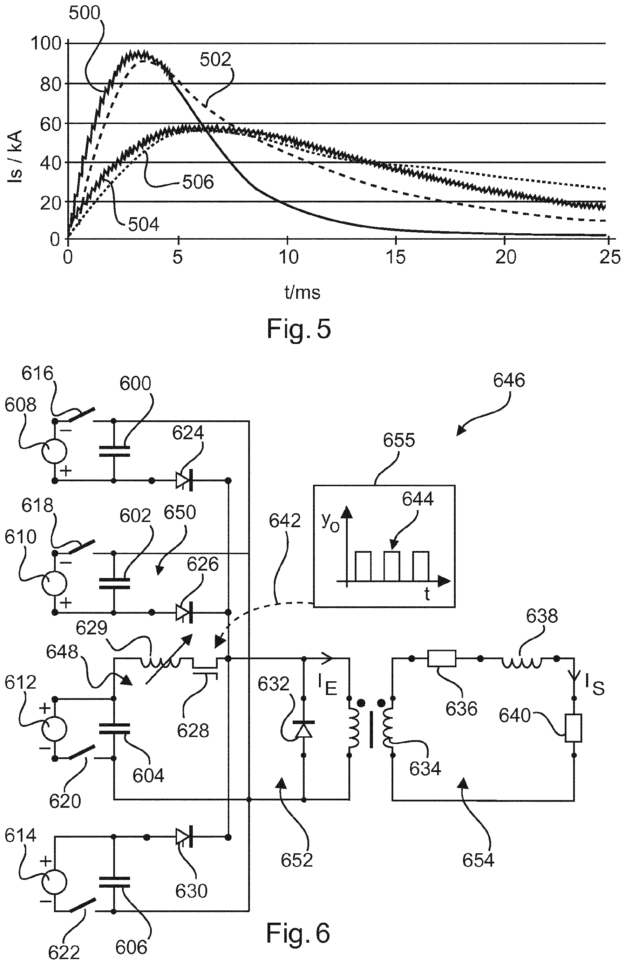

Figur 5 zeigt einen Vergleich zwischen der gepulsten Ansteuerung des Schaltmittels und dem Einsatz einer real vergrößerten Induktivität, beispielsweise einer Drossel, die zu gleichgroßen Spitzenströmen und identischen Stromanstiegszeiten führen. Wie in der Figur 5 an zwei Beispielen dargestellt ist, ähnelt der Stromverlauf bei getaktetem Betrieb des Schaltmittels - mit unterschiedlichen Tastgraden - tatsächlich dem Stromverlauf mit unterschiedlich großen Induktivitäten. Im ersten Beispiel nimmt die Kurve 500 (D = 50 %) einen ähnlichen Verlauf wie die Kurve 502, bei der die Induktivität mit einer Drossel um das 2,25fache erhöht wurde. Dabei liegt eine virtuelle Induktivität von Lvir ≈ 1,25 L bei dem Tastgrad von D = 50% vor, wobei dieser Wert auf den Wert L der realen Induktivität bezogen ist. Die Gesamtinduktivität wurde damit von L auf L+1,25L=2,25 L erhöht. Im zweiten Beispiel beträgt der Tastgrad D = 20% (Kurve 504), wobei eine virtuelle Induktivität von Lvir ≈ 6,3 L vorliegt. Wie in der Figur 5 zu sehen ist, ähneln sich die Verläufe von 504 und 506 in Näherung erneut. Demnach kann die virtuelle Induktivität über den Tastgrad D gesteuert werden, insbesondere durch ein Reduzieren des Tastgrades erhöht werden. In der Figur 5 ist auch ein überlagertes, sägezahnförmiges Muster bei den Kurven 500 und 504 im Vergleich zu den Kurven 502 und 506 zu erkennen.

Die Unterschiede der Stromverläufe (500 zu 502 und 504 zu 506) bei getaktetem Betrieb und mit reinen veränderten realen Induktivitäten im Bereich des Stromnachlaufs, also nach dem Spitzenstrom, ergeben sich aus den unterschiedlichen Bedingungen. Bei einer vergrößerten realen Induktivität wird zu Beginn der Kondensatorentladung eine größere Energie im Stromkreis gespeichert, sodass der Stromnachlauf höher ausfällt. Das Schweißverhalten der jeweils vergleichbaren Stromverläufe ist aber ähnlich, da die entscheidenden Anteile der beiden vergleichbaren Kurven fast identisch sind.

Figur 6 zeigt einen Schaltplan einer Mehrkondensator-Anwendung 646 bestehend aus einem gepulst-ansteuerbaren Schaltmittel 628 (z. B. IGBTs, GTOs oder IGCTs) und mehreren nicht-gepulst-ansteuerbaren Schaltmitteln 624, 626, 630 (z.B. Thyristoren).

Dabei lässt sich der Figur 6 entnehmen, dass der abschaltbare Leistungshalbleiter bzw. Leistungshalbleiterschalter 628 über ein Steuersignal 642 von einer Steuereinheit 655 gepulst angesteuert wird. Die gepulste Ansteuerung ist dabei vereinfacht mit einer Impulsfolge 644 dargestellt.

Ein abschaltbarer Leistungshalbleiter 628 bietet in einem Mehrkondensatorsystem 646 die breitesten Anwendungsmöglichkeiten. Die Schaltung in der Figur 6 besteht aus vier Kondensatoren 600, 602, 604 und 606. Dabei sind zwei Hauptkondensatoren 602 und 604 vorgesehen, die im Wesentlichen die Schweißenergie bereitstellen, und zwei Löschkondensatoren 600 und 606 mit vergleichsweise geringer Kapazität, die zum Löschen für den Halbleiterschalter 626 vorgesehen sind. Dabei kann jeder Kondensator über eine Ladevorrichtung 608, 610, 612 und 614 elektrisch geladen werden, wobei jeweils ein Ladeschalter 616, 618, 620 und 622 vorgesehen wird, um das Laden der Kondensatoren ein- und ausschalten zu können.

Der Kondensator 604 wird über einen schaltbaren Leistungshalbleiter bzw. Leistungshalbleiterschalter 628, der hier im Beispiel als IGBT gewählt wurde, auf den Transformator 634 geschaltet. Die virtuelle Induktivität 629 symbolisiert das Schaltverhalten des Schalters 628. Den Kondensator 602 schaltet ein Thyristor 626 - was die Kosten für einen zweiten IGCT erspart. Um auch den Thyristor 626 abschalten zu können, stehen somit die beiden Löschkondensatoren 600 und 606 zur Verfügung. Da schon der IGBT 628 eine große Flexibilität bei der Gestaltung des Stromverlaufs bietet, kann ggf. auf die beiden Löschkondensatoren 600 und 606 verzichtet werden.

Ferner ist der Figur 6 zu entnehmen, dass das Mehrkondensatorsystem 646 einen Entladekreis 652 und einen Schweißstromkreis 654 mit Freilaufmittel 632 aufweist, die über den Transformator 634 mit einem Übersetzungsverhältnis ü miteinander verbunden sind. Dabei ist der Entladekreis 652 im gezeigten Ausführungsbeispiel aus den beiden parallel geschalteten Entladekreisen 648 und 650 aufgebaut, die jeweils einen Kondensator und ein Schaltmittel umfassen. Demnach wird der Schweißstrom I_{S} im Schweißstromkreis nach I_{S} = ü₂ · I_{E} erzeugt, wobei I_{E} einen Entladekreisstrom im Entladekreis beschreibt, der dem Transformator 634 zugeführt wird. Dabei ist es vorgesehen, dass der erzeugte Schweißstrom I_{S} im Schweißstromkreis 654 jeweils nur in einem der beiden Entladekreise 648 oder 650 erzeugt wird, da sonst ungewollte Kondensatorausgleichströme zwischen den Kondensatoren 602 und 604 entstehen könnten, wenn die Schaltmittel 626 und 628 gleichzeitig eingeschaltet sind. Die beiden Entladekreise, die die nicht-gepulst-ansteuerbaren Schaltmittel 624, 630 aufweisen, sind zum Löschen des Thyristors 626 vorgesehen. Damit kann der Thyristor zu einem gewünschten Zeitpunkt abgeschaltet werden.

Der erzeugte Schweißstrom I_{S} fließt demnach über den realen Widerstand 636 des Schweißstromkreises 654, der realen Induktivität 638 sowie den Lastwiderstand 640. Dabei beschreibt der Lastwiderstand 640 den elektrischen Widerstand der Fügepartner, die im Fügebereich zwischen den Elektroden angeordnet sind. Die Elektroden sind dabei in der Figur 6 nicht dargestellt.

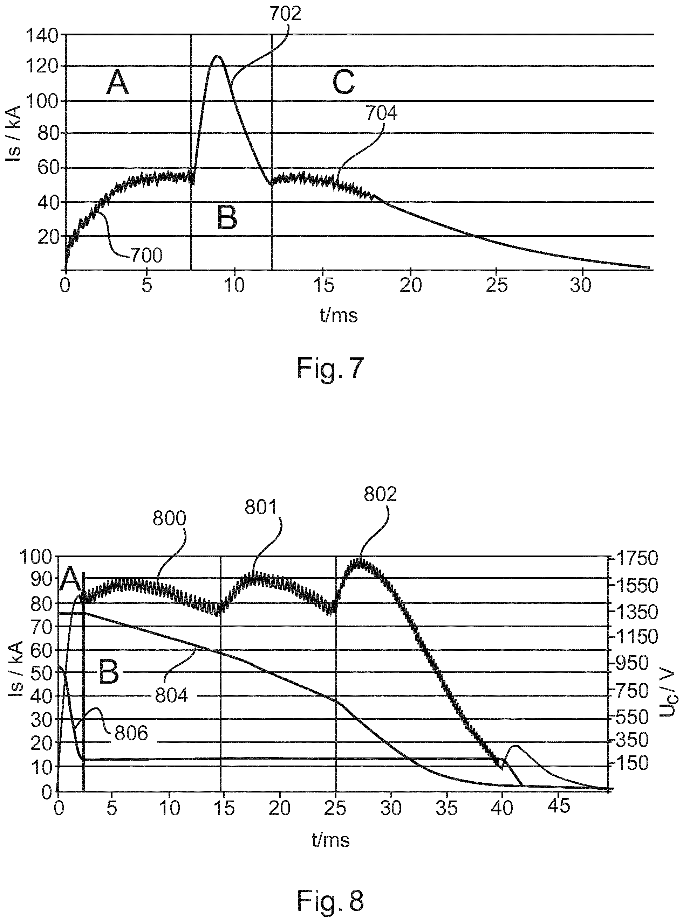

Figur 7 zeigt einen Schweißvorgang im Mehrkondensatorsystem 646 mit schonendem Vorwärmen im Bereich A und langem Nachwärmen im Bereich C in einer Variante mit einem Tastgrad von D = 20 %. Allein durch die Änderung des Tastgrades D des IGBTs 628, der den Kondensator 604 entlädt, und der Zeit, in der der IGBT gepulst angesteuert wird, ergeben sich sehr unterschiedliche Möglichkeiten zum Vor-/Nachwärmen. Wird zum Beispiel ein höherer Tastgrad von D = 35 % anstatt wie gezeigt von 20 % gewählt, stellt sich ein deutlich stärkerer Stromanstieg während des Strompulses ein. Dabei würde auch das Nachwärmen wesentlich stärker ausgeprägt sein als im gezeigten Fall, sodass sich deutlich bessere Gefügeeigenschaften einstellen ließen.

Neben dem Vorwärmbereich A und dem Nachwärmbereich C, in dem ausschließlich der IGBT die Schweißstromerzeugung 700 und 704 durchführt, ist in der Figur 7 zusätzlich noch ein Zwischenzeitraum B dargestellt. In diesem Zwischenzeitraum wird ein Zwischenschweißstrom 702 durch ein einmaliges Einschalten und Abschalten des Thyristors 626 erzeugt, der nämlich am Anfang des Bereichs B eingeschaltet und am Ende des Bereichs B abgeschaltet bzw. gelöscht wird. Somit kann beispielsweise zuerst ein gesteuerter Schweißstrom 700 im Bereich A zum Vorwärmen der Fügepartner mit dem gepulst-ansteuerbaren IGBT im Entladekreis 648 erzeugt werden. Anschließend wird zur Herstellung einer Schweißverbindung auf den Entladekreis 650 umgeschaltet, sodass der nicht-gepulst-ansteuerbare Thyristor den Zwischenschweißstrom 702 in einem Zwischenzeitraum bzw. im Zwischenbereich B erzeugt. Anschließend wird dann wiederum auf den IGBT umgeschaltet, der während des Zwischenbereiches B inaktiv bzw. geöffnet war, um anschließend einen Schweißstrom 704 zum Nachwärmen zu erzeugen.

Figur 8 zeigt eine Erzeugung eines Langzeitpulses mit Hilfe der gepulsten Ansteuerung des Schaltmittels. Dazu sind in der Figur 8 drei Kurvenverläufe dargestellt. Die Kurve 800 einschließlich der Bereiche 801 und 802 zeigt den erzeugten Schweißstrom I_{S} im zeitlichen Verlauf, die Kurve 804 die Spannung am Kondensator 604 des gepulst-ansteuerbaren Schaltmittels 628, sowie die Kurve 806 die Spannung am Kondensator 602 am nicht-gepulst-steuerbaren Schaltmittel 626 während eines Schweißvorgangs im Mehrkondensatorsystem 646.

Wie aus den Kurvenverläufen 800 und 806 deutlich wird, sorgt der Kondensator 602 für den steilen Stromanstieg des Schweißstroms am Beginn, indem der Kondensator 602 im Bereich A mit dem Thyristor 626 entladen wird. Daraufhin schaltet der Thyristor 626 wieder aus und der gepulst-ansteuerbare IGCT 628 erzeugt den Schweißstrom I_{C} im Bereich B. Dabei entsteht der Langzeitpuls durch das gesteuerte Entladen des Kondensators 604, wobei der Tastgrad stufenweise von 25 % über 38 % auf 62 % geändert wird (800-802). Die stufenweise Änderung ist ein einfacher Anwendungsfall. Im praktischen Einsatz wäre natürlich ein fließender Übergang möglich und ggf. von Vorteil, da sich dann ein kontinuierlicher Stromfluss ohne Knickstellen ergibt.

Ebenso kann eine Stromregelung vorgesehen werden. Selbst wenn keine Konstantstromregelung als notwendig erachtet wird, ist eine Stromregelung mit einer anderen Führungsgröße denkbar. So ist es sinnvoll, den Strom in Abhängigkeit vom Widerstand 640 zu regeln oder anhand der aufgenommen Messgrößen Schweißstrom oder Kondensatorspannung. Auf diese Art ließe sich eine adaptive Regelung realisieren. Es kommt auch in Betracht, einen Schweißstromverlauf vorzugeben und diesen dann über eine Regelung zu erreichen, den tatsächlichen Schweißstrom dem vorgegebenen also nachzuführen.

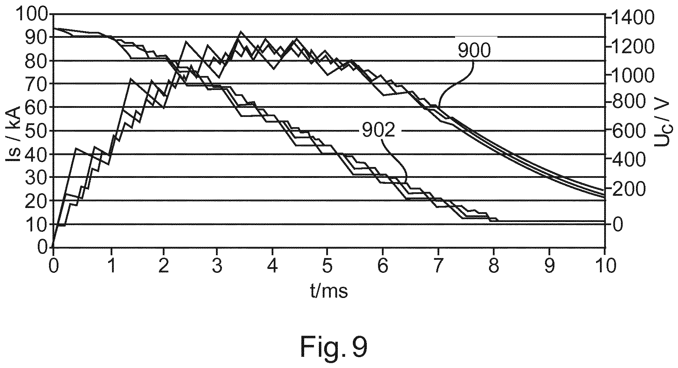

Figur 9 zeigt den Einfluss der Taktfrequenz auf den Verlauf des Schweißstroms I_{S} und der Kondensatorspannung. Während der Tastgrad D im getakteten Betrieb einen großen Einfluss auf den Stromverlauf hat, spielt die Taktfrequenz eine untergeordnete Rolle, mit der das Schaltmittel gepulst wird. Wie die Figur 9 zeigt, bleibt die Entladezeit des Kondensators - und damit die Kurvenform des Schweißstroms - unbeeinflusst von der Taktfrequenz. Die Kondensatorspannung 902 die insgesamt dreimal bei den Taktfrequenzen 1kHz, 2kHz und 5kHz bei einem gleichbleibenden Tastgrad von D=40% aufgezeichnet wurde, erreicht ungefähr, trotz unterschiedlicher Taktfrequenzen, bei etwa 8ms den Spannungswert von 0V. Beim ebenfalls aufgezeichneten Schweißstrom 900 führen hingegen höhere Frequenzen zu einer Reduzierung der Stromschwankungen während einer Periodendauer im Schweißstromverlauf 900. Die Frage nach einer Minimalfrequenz beantwortet sich dabei ebenfalls anhand der Figur 9: Mit einer Taktfrequenz von 1 kHz ergibt sich pro Millisekunde eine Periode, was zu einer sehr großen Stromänderung führt. Diese Frequenz sollte deshalb nicht unterschritten werden - besser wären daher 5 kHz als Standardwert.

Es wurde somit erkannt, dass nachteilig bei der alleinigen Verwendung von Thyristoren zum Erzeugen eines Schweißstroms bei KE-Schweißverfahren ist, dass eine Möglichkeit fehlt, den erzeugten Schweißstrom beliebig während eines Schweißvorgangs steuern zu können. Insbesondere wäre es dabei wünschenswert die Stromanstiegsgeschwindigkeit des erzeugten Schweißstroms ändern zu können, um die ohmsche Erwärmung der Fügestelle zu steuern und bessere Schweißresultate zu erzielen.

Thyristoren weisen nämlich ohne eine konstruktive Veränderung der Schweißvorrichtung denselben Stromanstieg und Stromspitzenwert auf, da eine feste Kopplung von Spitzenstrom und Schweißzeit vorliegt. Dies bedeutet, dass der Stromverlauf des Schweißstroms bei der Verwendung eines Thyristors ohne eine bauliche Veränderung der Schweißvorrichtung annähernd gleich verläuft und lediglich die Zeitdauer gesteuert werden kann, die der Thyristor eingeschaltet ist. In anderen Worten wird der Thyristor nur einmal eingeschaltet und anschließend zu einem späteren Zeitpunkt wieder gelöscht. Dabei ist es nicht möglich während des Stromflusses eine Veränderung der Schweißparameter vorzunehmen, wie beispielsweise die Schweißstromimpuls-Länge, den Maximalwert des Schweißstromes oder den Energieinhalt der in der Fügestelle umgesetzt wird. Auch der Schweißstromanstieg und der Momentanwert der Energiezufuhr in die Fügestelle kann damit während des Stromflusses nicht verändert werden.

Wünschenswert wäre es daher, dass der Schweißstrom gesteuert werden könnte, um ein gezieltes Vorwärmen und Nachwärmen der Fügestelle mit einem Schweißstrom während eines Schweißvorgangs realisieren zu können. Das Vor- und Nachwärmen ist bei konventionellen KE-Schweißverfahren jedoch schlecht realisierbar, da der Schweißvorgang nur mit einem einzigen Stromimpuls erfolgt, der durch ein ungesteuertes Entladen des Kondensators erzeugt wird. Entsprechend wird eine Lösung durch Verwendung eines steuerbaren Schaltmittels vorgeschlagen, wobei das Schaltmittel durch gepulste Ansteuerung eine hohe Flexibilität zum Einstellen des Schweißstroms erreicht.

## Patentansprüche

1. Kondensator-Entladungs-Schweißverfahren zum Verbinden eines Fügepartnersatzes bestehend aus wenigstens zwei Fügepartnern, umfassend die Schritte:
- elektrisches Laden wenigstens eines ersten Kondensators (604) mit einer ersten Ladevorrichtung (612);
- Erzeugen eines elektrischen Schweißstromes (I_{S}) durch gesteuertes Entladen des elektrisch geladenen ersten Kondensators (604), wobei
der erste Kondensator (604) über einen ersten Entladekreis (652) entladen wird, wodurch ein Entladekreisstrom (I_{E}) erzeugt wird,
der Schweißstrom (I_{S}) durch Transformation des Entladekreisstroms (I_{E}) erzeugt wird, und
wobei der Schweißstrom (I_{S}) über zwei Elektroden durch einen zwischen den Elektroden angeordneten Fügebereich der wenigstens zwei Fügepartner des Fügepartnersatzes fließt, und
das Entladen durch ein im ersten Entladekreis (652) angeordnetes steuerbares Schaltmittel (628) derart gesteuert wird, dass der Entladekreisstrom (I_{E}) und dadurch der erzeugte Schweißstrom (I_{S}) durch ein gepulstes Ansteuern des steuerbaren Schaltmittels (628) gesteuert wird.

2. Kondensator-Entladungs-Schweißverfahren nach Anspruch 1, **dadurch gekennzeichnet, dass**
- ein Schweißstromkreis (654) und ein Transformator (634) vorgesehen sind und
- der Entladekreis (652) und der Schweißstromkreis (654) über den Transformator (634) gekoppelt sind, so dass der Schweißstrom (I_{S}) durch Transformation des Entladestroms (I_{E}) erzeugt wird, und wobei
- der Schweißstromkreis (654), der Entladekreis (652) und der Transformator (634) zusammen eine reale Induktivität aufweisen und
- der Entladekreis (652) eine virtuelle Induktivität (629) umfasst, wobei
- die reale Induktivität im Wesentlichen durch den konstruktiven Aufbau des Entladekreises (652) und Schweißstromkreises (654) gegeben ist, der ein passives induktives Bauteil beinhalten kann, und
- die virtuelle Induktivität (629) durch das Schaltmittel (628) realisiert wird, wobei das Schaltmittel so angesteuert wird, dass es sich in dem Entladekreis (652) wie eine Induktivität verhält, und wobei
- die reale und die virtuelle Induktivität eine Gesamtinduktivität ausbilden.

3. Kondensator-Entladungs-Schweißverfahren nach einem der vorstehenden Ansprüche, **dadurch gekennzeichnet, dass** der Schweißstrom (I_{S}) zumindest teilweise über die virtuelle Induktivität (629) vorgegeben oder gesteuert wird, wobei
- die virtuelle Induktivität steuerbar ist und/oder
- die reale Induktivität und die virtuelle Induktivität in Reihe geschaltet sind und dadurch die Gesamtinduktivität ausbilden, so dass die Gesamtinduktivität größer ist als die reale Induktivität.

4. Kondensator-Entladungs-Schweißverfahren nach einem der vorstehenden Ansprüche, **dadurch gekennzeichnet, dass**
- für das gepulste Ansteuern ein Tastgrad (D) vorgegeben wird, um dadurch den elektrischen Schweißstrom (I_{S}) bzw. die virtuelle Induktivität (629) zu steuern, insbesondere um dadurch einen Stromanstieg des Schweißstromes zu steuern, wobei der Tastgrad ein Verhältnis einer Pulsdauer zu einer Periodendauer einer Pulsfolge angibt.

5. Kondensator-Entladungs-Schweißverfahren nach einem der vorstehenden Ansprüche, **dadurch gekennzeichnet, dass**
- Tastgrade (D) während eines Schweißvorgangs verändert werden, um dadurch den Schweißstrom (I_{S}) während des Entladevorgangs zu verändern, insbesondere, dass
- einem Absinken des Schweißstroms durch eine abfallende Kondensatorspannung dadurch entgegengewirkt wird, dass die Tastgrade während eines Schweißvorgangs zum Ende des Schweißvorgangs hin erhöht werden.

6. Kondensator-Entladungs-Schweißverfahren nach einem der vorstehenden Ansprüche, **dadurch gekennzeichnet, dass**
- das gepulste Ansteuern des Schaltmittels (628) derart gesteuert wird, dass ein vorgegebener Maximalwert des Schweißstromes (I_{S}) nicht überschritten wird,
- wobei der Maximalwert über einen bzw. den Tastgrad (D) umgesetzt wird.

7. Kondensator-Entladungs-Schweißverfahren nach einem der vorstehenden Ansprüche, **dadurch gekennzeichnet, dass** das Schaltmittel (628) einen oder mehrere steuerbare Halbleiterschalter aufweist, insbesondere aus der Liste aufweisend die Halbleiterschalter
- IGBT,
- GTO und
- IGCT.

8. Kondensator-Entladungs-Schweißverfahren nach einem der vorstehenden Ansprüche, **dadurch gekennzeichnet, dass** das Schaltmittel (628) mehrere zueinander parallel geschaltete steuerbare Halbleiterschalter aufweist, insbesondere um dadurch einen hohen Schweißstrom (I_{S}) zu erreichen.

9. Kondensator-Entladungs-Schweißverfahren nach einem der vorstehenden Ansprüche, **dadurch gekennzeichnet, dass**
- der Schweißstrom I_{S} ein über ein Übersetzungsverhältnis ü₂ eines Transformators einstellbarer Entladekreisstrom I_{E} des Kondensators nach der Gleichung I_{S} = ü₂ · I_{E} ist, wobei
- der Entladekreisstrom über den Tastgrad mit dem Schaltmittel gepulst wird, und
wobei
- der Entladekreisstrom einen Maximalwert von wenigstens 5kA aufweist, insbesondere von wenigstens 10kA und/oder
- das Schaltmittel über eine Pulsfrequenz von wenigstens 1kHz, insbesondere wenigstens 5kHz angesteuert wird.

10. Kondensator-Entladungs-Schweißverfahren nach einem der vorstehenden Ansprüche, **dadurch gekennzeichnet, dass** über das Schaltmittel (628) eine dem Fügebereich während des Schweißvorgangs zuzuführende Energiemenge gesteuert wird.

11. Kondensator-Entladungs-Schweißverfahren nach einem der vorstehenden Ansprüche, **dadurch gekennzeichnet, dass**
- der Schweißstrom (I_{S}) während des Schweißvorgangs in Abhängigkeit wenigstens einer Messgröße geändert bzw. geregelt wird, insbesondere, dass
- während des Schweißvorgangs aus einer gleichzeitigen Strom- und Spannungsmessung ein Schweißwiderstand ermittelt wird und
- der Tastgrad in Abhängigkeit des erfassten Schweißstroms gesteuert wird, insbesondere, um den Schweißstrom dadurch auf einen Sollstrom zu regeln, und/oder
- der Schweißstrom in Abhängigkeit der Messgrößen, insbesondere aus der Liste aufweisend
- Schweißwiderstand
- Elektrodenweg, und
- Presskraft der Elektroden
geändert bzw. geregelt wird, und/oder
- eine Strombegrenzung des Schweißstroms in Abhängigkeit wenigstens einer Messgröße geändert bzw. geregelt wird.

12. Kondensator-Entladungs-Schweißverfahren nach einem der vorstehenden Ansprüche, **dadurch gekennzeichnet, dass**
- die beiden Elektroden an wenigstens einen weiteren Entladekreis (650) angeschlossen sind und der weitere Entladekreis (650)
- einen weiteren Kondensator (602) aufweist und
- ein weiteres Schaltmittel (626) zum Steuern eines Entladens des weiteren Kondensators aufweist, um einen weiteren Schweißstrom in einem zusätzlichen Zeitabschnitt über die beiden Elektroden zu steuern, wobei vorzugsweise
- das Entladen des weiteren Kondensators durch wenigstens ein weiteres Schaltmittel (626) derart gesteuert wird, dass der erzeugte zusätzliche Schweißstromabschnitt durch ein einmaliges Einschalten und Abschalten des Schaltmittels gesteuert wird, und außerdem oder alternativ
- in dem zusätzlichen Zeitabschnitt nur der zusätzliche Schweißstrom erzeugt wird und das steuerbare Schaltmittel (628) dabei geöffnet bleibt.

13. Kondensator-Entladungs-Schweißvorrichtung zum Durchführen eines Kondensator-Entladungs-Schweißverfahrens zum Verbinden eines Fügepartnersatzes bestehend aus wenigstens zwei Fügepartnern, umfassend:
- einen ersten Entladekreis (652) mit
- einem ersten Kondensator (604) zum Bereitstellen einer elektrischen Ladung für den Schweißvorgang, und
- einem elektrisch in Reihe zum ersten Kondensator geschaltetes steuerbares Schaltmittel (628) zum gesteuerten Entladen des Kondensators zum Erzeugen eines Entladekreisstromes (I_{E}), und
- einen Schweißstromkreis (654) mit
- zwei Elektroden zum Führen eines durch den Entladekreisstrom erzeugten Schweißstromes (I_{S}) über die wenigstens zwei Fügepartner,
- einen Transformator (634) zum Koppeln des Entladekreises und des Schweißstromkreises so, dass der Schweißstrom durch Transformation des Entladestroms erzeugt wird, wobei
das steuerbare Schaltmittel zum gepulsten Ansteuern vorbereitet ist, um über das gepulste Ansteuern den Entladekreisstrom und damit den Schweißstrom zu steuern.

14. Kondensator-Entladungs-Schweißvorrichtung nach Anspruch 13, **dadurch gekennzeichnet, dass**
- eine Ladevorrichtung (612) vorgesehen ist, zum Laden des ersten Kondensators, und
- der Entladekreis einen zum ersten Kondensator und zum steuerbaren Schaltmittel parallel geschaltetes Freilaufmittel (632) umfasst, insbesondere Freilaufdiode oder Freilaufthyristor, zum Verhindern einer Unterbrechung des Entladekreisstromes bei geöffnetem steuerbarem Schaltmittel (628).

15. Kondensator-Entladungs-Schweißvorrichtung nach Anspruch 13 oder 14, **dadurch gekennzeichnet, dass**
- wenigstens ein weiterer Entladekreis (650) vorgesehen ist, umfassend:
- wenigstens einen weiteren Kondensator (602);
- wenigstens eine weitere Ladevorrichtung (610) zum elektrischen Laden des weiteren Kondensators und
- wenigstens ein weiteres Schaltmittel (626), insbesondere nicht-steuerbares Schaltmittel, das zu dem weiteren Kondensator in Reihe geschaltet ist, zum Erzeugen des Entladekreisstromes, wobei
wenigstens eine Steuereinheit (655) vorgesehen ist, um das steuerbare Schaltmittel (628) des ersten Entladekreises und das nicht steuerbare Schaltmittel (626) des weiteren Entladekreises (650) so zu koordinieren, dass jeweils nur eines der beiden Schaltmittel aktiv ist, um den Entladekreisstrom zu steuern, um dadurch den Schweißstrom zu steuern.

16. Kondensator-Entladungs-Schweißvorrichtung nach einem der Ansprüche 13 bis 15, **dadurch gekennzeichnet, dass** die Kondensator-Entladungs-Schweißvorrichtung, insbesondere die Steuereinheit, dazu vorbereitet ist, ein Kondensator-Entladungs-Schweißverfahren nach einem der Ansprüche 1-12 auszuführen.
